(19) **Europäisches Patentamt / European Patent Office / Office européen des brevets**

(11) **EP 4 433 531 B1**

(12) **EUROPEAN PATENT SPECIFICATION**

(45) Date of publication and mention
of the grant of the patent:
**10.12.2025  Bulletin 2025/50**

(21) Application number: **22818626.8**

(22) Date of filing: **16.11.2022**

(51) International Patent Classification (IPC):
*C08J 11/18* (2006.01)          *C08J 11/24* (2006.01)

(52) Cooperative Patent Classification (CPC):
**C08J 11/24; C08J 11/16;** B01J 31/0202;
B01J 31/0249; B01J 31/04; C08J 2367/00;
Y02W 30/62

(86) International application number:
**PCT/EP2022/082101**

(87) International publication number:
**WO 2023/088946 (25.05.2023 Gazette 2023/21)**

(54) **POLYESTER DEPOLYMERISATION**

POLYESTER-DEPOLYMERISIERUNG

DÉPOLYMÉRISATION DE POLYESTER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.11.2021  GB 202116474**

(43) Date of publication of application:
**25.09.2024  Bulletin 2024/39**

(73) Proprietor: **Technological University
of the Shannon: Midlands Midwest
Athlone N37 HD68 (IE)**

(72) Inventors:
• **BRENNAN FOURNET, Margaret**
Athlone (IE)
• **ADLY ATTALLAH, Olivia**
Athlone (IE)
• **MAJOR, Ian**
Athlone (IE)
• **CHEN, Yuanyuan**
Athlone (IE)
• **MOJICEVIC, Marija**
Athlone (IE)

(74) Representative: **Barker Brettell LLP
100 Hagley Road
Edgbaston
Birmingham, West Midlands B16 8QQ (GB)**

(56) References cited:
**WO-A1-2021/123299     WO-A1-2022/216681**

• ESMAIL ASIYAH ET AL: "Bioconversion of
Terephthalic Acid and Ethylene Glycol Into
Bacterial Cellulose by Komagataeibacter
xylinusDSM 2004 and DSM 46604", MEDLINE, US
NATIONAL LIBRARY OF MEDICINE (NLM),
BETHESDA, MD, US, 1 January 2022
(2022-01-01), XP002808574
• JIANG XIANCAI ET AL: "Studies of the
plasticizing effect of different hydrophilic
inorganic salts on starch/poly (vinyl alcohol)
films", INTERNATIONAL JOURNAL OF
BIOLOGICAL MACROMOLECULES, ELSEVIER
BV, NL, vol. 82, 28 November 2015 (2015-11-28),
pages 223 - 230, XP029358037, ISSN: 0141-8130,
DOI: 10.1016/J.IJBIOMAC.2015.11.046
• DATABASE MEDLINE [online] US NATIONAL
LIBRARY OF MEDICINE (NLM), BETHESDA, MD,
US; 5 April 2022 (2022-04-05), ESMAIL ASIYAH
ET AL: "Bioconversion of Terephthalic Acid and
Ethylene Glycol Into Bacterial Cellulose by
Komagataeibacter xylinusDSM 2004 and DSM
46604.", XP002808574, Database accession no.
NLM35480983

• **ESMAIL ASIYAH ET AL: "Bioconversion of Terephthalic Acid and Ethylene Glycol Into Bacterial Cellulose by Komagataeibacter xylinusDSM 2004 and DSM 46604.", FRONTIERS IN BIOENGINEERING AND BIOTECHNOLOGY 2022, vol. 10, 2022, pages 853322, ISSN: 2296-4185**

## Description

### Field of the Invention

The invention relates to the processing of polyester plastic waste material, in particular post-consumer polyester waste material such as post-consumer PET waste.

### Background

The lack of adequate technologies to complete the life cycle for plastics combined with the unabated demand for ever increasing production presents an urgent global problem. Economically, conventional recycling methods only make sense when clean material is available in high quantities with advanced systems for mixed stream sorting.

Polyethylene terephthalate (PET) is the world's most commonly used plastic. The global market for PET is currently approximately 56 million tons per annum, with drinking bottles manufacturing accounting for approximately 23 million tons per annum. Processing of virgin PET, i.e. newly synthesised PET that has not been previously incorporated into another product, is a mainstay technology used to make bottles, packaging materials or as part of packaging materials for a wide range of products including soft drinks, alcoholic beverages, food containers, detergents, cosmetics, pharmaceutical products, plant pots and edible oils.

While PET is the most recycled plastic packaging material in Europe, in 2017, of the 3.3 million tonnes of PET bottles used only 58.2% (1.92 million tonnes) were collected, with the remainder representing a source of pollution within the environment, primarily terminating within the oceans. The use of recycled PET (rPET), which is PET that has previously been incorporated into another product, remains relatively low, with a maximum of 18.2% of rPET use in new soft drink bottles having been reported. The properties of rPET are typically inferior to the properties of newly synthesised virgin PET due to the degradation of the PET during recycling and contamination with other materials.

Further obstacles to the recycling of PET are the industrial challenges in the recycling of 'pots, tubs and trays' (PTTs), which have a broad molecular weight range, incorporate mixed colours, pigments, additives and residues, and often incorporate multilayer materials in addition to PET, such as low-density polyethylene (LDPE), ethylene vinyl alcohol (EVOH), polyamide (PA) and paper. Separating the PET from these additional materials and layers is challenging, and the resulting rPET properties are inferior to virgin PET. WO2021/123299A1 discloses a process for degrading a plastic product by foaming at least partially the plastic product and depolymerizing at least one target polymer of the partially foamed plastic product, where the step of foaming is performed at a temperature at which the plastic product is in a partially or totally molten state. WO2022/216681A1 discloses a method for chemically recycling a condensation polymer by meltprocessing a mixture including a condensation polymer and an internal catalyst to increase the amorphous content of the polymer, followed by depolymerizing polymer in a reaction medium with a reactive solvent. XP029358037 titled "Studies of the plasticizing effect of different hydrophilic inorganic salts on starch/poly(vinyl alcohol) films" discloses a study into the effects different inorganic salts LiCl, MgCl2·6H2O, CaCl2, and AlCl3·6H2O on the crystalline, thermal, water vapor barrier, and tensile properties of starch/PVA films.

Rather than simply recycling existing PET material using conventional mechanical reprocessing methods, it is therefore in many ways preferable to depolymerise the PET into its constituent monomers, namely terephthalic acid, ethylene glycol, and/or bis(2-hydroxyethyl) terephthalate (BHET), which can then be separated, purified and repolymerised into virgin PET for use in consumer items.

However, there is currently no high throughput depolymerization technology that is capable of processing washed and shredded, but otherwise unprocessed, post-consumer PET waste material to depolymerise the PET into usable monomers with a high yield in a cost effective, low carbon manner. In addition, reported depolymerization techniques typically require the use of various chemical reagents and high volumes of solvents during processing that are environmentally unfriendly and can lead to contamination of the obtained monomer stream. These associated contaminants must be removed from the produced monomers to very low levels to allow the usability of these monomers in the formation of virgin PET or other applications. The extraction and recycling of liquid solvents from the monomer stream is challenging, with purification techniques used for this purpose often involving several steps of washing, distillation, crystallization, and additional chemical reactions, which drastically elevates the economic cost of the produced monomers and the environmental burden of the process.

There is therefore a need for new methods for depolymerising PET and other polyester waste material that overcome these existing challenges. In particular, there is a need for new methods for depolymerising post-consumer polyester in a low-carbon, high-yield, economically viable, environmentally friendly, and high-throughput manner.

### Summary of the Invention

The invention is set out in the appended independent claims. Preferable or optional features are set out in the appended dependent claims. The invention provides a method for processing plastic waste material comprising polyester (e.g. comprising PET). The method comprises performing hot-melt extrusion of an extrusion mixture comprising the plastic waste material and a depolymerisation agent to depolymerise the polyester. The extrusion mixture further (i.e. additionally) comprises a plasticising agent comprising one or more inorganic salts. The one or more inorganic salts are in addition to (i.e. separate and distinct from) the depolymerisation agent. The or each inorganic salt is selected from the list consisting of sodium chloride, lithium sulfate, lithium carbonate, lithium bicarbonate, potassium chloride, potassium carbonate, potassium bicarbonate, magnesium sulfate, magnesium carbonate, magnesium bicarbonate, and a calcium salt.

The one or more inorganic salts act as a plasticiser to plasticise the plastic waste material during the hot-melt extrusion of the extrusion mixture.

The total amount of the one or more inorganic salts in the extrusion mixture may be at least 20%, by weight, of the extrusion mixture. The total amount of the one or more inorganic salts in the extrusion mixture may be at least 30%, by weight, of the extrusion mixture. The total amount of the one or more inorganic salts in the extrusion mixture may be at least 40%, by weight, of the extrusion mixture.

The total amount, by weight, of the one or more inorganic salts in the extrusion mixture may be at least equal to the amount, by weight, of the plastic waste material in the extrusion mixture.

The total amount, by weight, of the one or more inorganic salts in the extrusion mixture may be at least 1.2 times the amount, by weight, of the plastic waste material in the extrusion mixture, preferably at least 1.4 times the amount, by weight, of the plastic waste material in the extrusion mixture. In other words, the ratio of the total amount, by weight, of the one or more inorganic salts to the amount, by weight, of the plastic waste material in the extrusion mixture may be at least 1:1, preferably at least 1.2:1, even more preferably at least 1.4:1.

Each of the one or more inorganic salts may be a salt of a monovalent cation.

The depolymerisation agent may comprise a cation, and the one or more inorganic salts may each be a salt of the same cation, i.e. may each comprise the same cation as the depolymerisation agent.

The depolymerisation agent may be a hydroxide of the cation.

The depolymerisation agent may be sodium hydroxide or a glycol, such as ethylene glycol.

The extrusion mixture may be substantially free of water.

The extrusion mixture may be substantially free of solvents, other than the depolymerisation agent, that are capable of dissolving the polyester during the hot-melt extrusion.

The polyester/plastic waste material may be not solvated (i.e. not in solution) during the hot-melt extrusion of the extrusion mixture.

The extrusion mixture may be substantially free of monoalcohols.

The hot-melt extrusion of the extrusion mixture may be performed under induced shear conditions.

The hot-melt extrusion of the extrusion mixture is performed in a screw extruder, preferably a twin-screw extruder.

The polyester may be depolymerised by hydrolysis, and the depolymerisation agent may be a base.

The base may be a hydroxide. The base may be a hydroxide of an alkali metal. The base may be sodium hydroxide, potassium hydroxide or ammonium hydroxide. In particular, the base may be sodium hydroxide.

The polyester may be depolymerised by glycolysis, and the depolymerisation agent may be a glycol.

The glycol may be a monomer of the polyester.

The glycol may be ethylene glycol, for example when the polyester is or comprises PET.

The amount, by weight, of the glycol in the extrusion mixture may be at least 20% of the amount, by weight, of the plastic waste material in the extrusion mixture. In other words, the ratio of the amount, by weight, of the glycol in the extrusion mixture to the amount, by weight, of the plastic waste material in the extrusion mixture may be at least 0.2:1.

The extrusion mixture may comprise one or more depolymerisation catalysts.

The one or more depolymerisation catalysts may comprise one or more of urea, zinc acetate, zinc chloride, glycerol, and thiourea.

The one or more depolymerisation catalysts may comprise urea and/or zinc acetate.

The one or more depolymerisation catalysts may comprise a deep eutectic solvent. The deep eutectic solvent may comprise either zinc acetate or zinc chloride in combination with urea, thiourea or glycerol. The deep eutectic solvent may comprise urea and zinc acetate, zinc chloride and glycerol, or zinc chloride and thiourea.

The hot-melt extrusion of the extrusion mixture may yield an extruded reaction mixture comprising one or more monomers of the polyester and, typically, residual polyester.

The method may comprise separating the residual polyester from the reaction mixture by dispersing the reaction mixture in water and filtering the resulting dispersion to obtain the residual polyester as a residue. The resulting filtrate comprises the monomers.

The method may further comprise separating the monomers from the filtrate by crystalising and/or precipitating the monomers from the filtrate. The crystalised and/or precipitated monomers may be filtered out of the filtrate and collected as a residue.

The separation of the monomers from the filtrate may comprise acidifying the filtrate to precipitate dicarboxylic acid monomers (e.g. terephthalic acid).

The separation of the monomers from the filtrate may comprise concentrating the filtrate and crystallising diester monomers (e.g. BHET).

The method may comprise enzymatically depolymerising residual polyester obtained from the hot-melt extrusion of the extrusion mixture.

The residual polyester may be enzymatically depolymerised by mixing the residual polyester with one or more enzymes capable of depolymerising the polyester. The residual polyester may be enzymatically depolymerised using one or more isolated enzymes capable of depolymerising the polyester. The residual polyester may be enzymatically depolymerised using microbes (e.g. one or more microbial strains) that produce enzymes capable of depolymerising the polyester. The enzymatic depolymerisation may yield monomers of the polyester.

The method may comprise using the residual polyester obtained from the hot-melt extrusion of the extrusion mixture or the monomers obtained from the enzymatic depolymerisation of the residual polyester as a feedstock for biopolymer production. The method may comprise using the residual polyester obtained from the hot-melt extrusion of the extrusion mixture as a feedstock for biopolymer production using microbes/microbial strain(s) that convert the residual polyester into one or more biopolymers. The method may therefore further comprise converting the residual polyester obtained from the hot-melt extrusion of the reaction mixture into one or more biopolymers using microbes/one or more microbial strains.

The biopolymer may be bacterial cellulose. The microbes/one or more microbial strains may comprise microbes belonging to the genus *Komagataeibacter.*

The hot-melt extrusion of the extrusion mixture may result in depolymerisation of at least 80%, by weight, of the polyester into monomers.

The depolymerisation of the polyester by hot-melt extrusion may therefore results in at least 80% weight loss of the polyester relative to the amount, by weight, of the polyester initially present in the extrusion mixture. In other words, the depolymerisation of the polyester by hot-melt extrusion may result in the amount, by weight, of the polyester reducing by at least 80% relative to the amount by weight of the polyester initially present in the extrusion mixture.

The polyester may be or may comprise polyethylene terephthalate (PET). The plastic waste material may be post-consumer PET waste material, i.e. plastic waste material comprising PET.

The invention also provides use of one or more inorganic salts as a plasticising agent to facilitate plasticisation of plastic waste material comprising polyester during depolymerisation of the plastic waste material by hot-melt extrusion of the plastic waste material in the presence of one or more depolymerisation agents. The or each inorganic salt is selected from the list consisting of sodium chloride, lithium sulfate, lithium carbonate, lithium bicarbonate, potassium chloride, potassium carbonate, potassium bicarbonate, magnesium sulfate, magnesium carbonate, magnesium bicarbonate, and a calcium salt.

The invention therefore provides a method for processing plastic waste material comprising polyester, the method comprising feeding components into a hot-melt extruder, wherein the components comprise the plastic waste material and a depolymerisation agent; and hot-melt extruding the components together in the extruder to depolymerise the polyester, wherein the components further comprise a plasticiser comprising one or more inorganic salts.

The total (combined) amount, by weight, of the one or more inorganic salts that are fed into the hot-melt extruder may be at least 20%, optionally at least 30%, of the total amount, by weight, of all of the components that are fed into the hot-melt extruder.

The total (combined) amount, by weight, of the one or more inorganic salts that are fed into the hot-melt extruder may be at least equal to the amount by weight of the plastic waste material that is fed into the hot-melt extruder.

The total amount, by weight, of the one or more inorganic salts that are fed into the hot-melt extruder may be at least 1.2 times the amount, by weight, of the plastic waste material that is fed into the hot-melt extruder, preferably at least 1.4 times the amount, by weight, of the plastic waste material that is fed into the hot-melt extruder.

The components may be substantially free of (i.e. not include) solvents, other than the one or more depolymerisation agents, that are capable of dissolving the polyester during the hot-melt extrusion.

The amount, by weight, of the glycol that is fed into the hot-melt extruder may be at least 20% of the amount, by weight, of the plastic waste material that is fed into the hot-melt extruder. In other words, the ratio of the amount, by weight, of the glycol that is fed into the extruder to the amount, by weight, of the plastic waste material that is fed into the extruder may be at least 0.2:1.

Also described is the use of one or more inorganic salts as a porogen during depolymerisation of plastic waste material comprising a polyester by hot-melt extrusion of the plastic waste material in the presence of one or more depolymerisation agents to form pores in residual polyester obtained from the hot-melt extrusion of the plastic waste material.

The invention also provides use of terephthalic acid obtained from the method described herein as a feedstock for bacterial cellulose production.

The bacterial cellulose production may use microbes belonging to the genus *Komagataeibacter.*

The terephthalic acid may be used as a glucose feedstock substitute for the bacterial cellulose production. The bacterial cellulose production may use feedstocks comprising the terephthalic acid and glucose.

## Brief Description of Figures

The invention will now be described by way of example only with reference to the accompanying figures.

**Figure 1a** shows scanning electron microscopy (SEM) images at magnifications of 100 times, 1000 times and 2000 times of unprocessed PET and residual PET obtained from Example 1 and Reference Example 1.

**Figure 1b** shows scanning electron microscopy (SEM) images at magnifications of 100 times, 1000 times and 2000 times of residual PET obtained from Example 3, Example 4 and Reference Example 2.

**Figure 2a** shows FTIR spectra of the untreated PLA used in Example 8 (solid line) and the reaction mixture obtained following Example 8 (dashed line).

**Figure 2b** shows FTIR spectra of the untreated PCL used in Example 9 (solid line) and the reaction mixture obtained following Example 9 (dashed line).

**Figure 3a** shows a UV spectrum of the liquid fraction of the reaction mixture obtained following Example 8.

**Figure 3b** shows a UV spectrum of the liquid fraction of the reaction mixture obtained following Example 9.

**Figure 4** shows HPLC analysis of a cultivation medium after 4 weeks of *Lysinomonas sp.* DG48 incubation with residual PET as a sole carbon source.

**Figure 5** shows bacterial cellulose films obtained from Examples 11a-d.

## Detailed Description

The invention provides a new method for depolymerising plastic waste material, in particular polyester plastic waste material such as post-consumer PET waste material, that results in a high degree of depolymerisation in a single-step, high-throughput process that utilises conventional equipment commonly found in plastics processing facilities, and which has a relatively low environmental burden due to the removal of the need to use solvents and other environmentally unfriendly chemicals and the short reaction times that are required to achieve high levels of depolymerisation. Additionally, the undepolymerised (residual) polyester that remains after the initial depolymerisation step has properties that make it particularly amenable to enzymatic depolymerisation, further improving the environmental credentials of the method and providing a means for near complete circularity of polyester plastic waste material with minimal residual waste plastic. The method of the invention is also well suited to the processing of post-consumer plastics that are contaminated with other materials due to the simple purification and extraction steps that are required to extract the monomers into which the polyester is depolymerised and the removal of the need to perform complex and burdensome solvent extraction steps. The reactive hot-melt extrusion process of the invention may also advantageously be performed as a continuous process, providing a notable advantage over conventional batch-type processes.

The method of the invention involves depolymerising plastic waste material comprising polyester, otherwise known as polyester plastic waste material, by performing hot-melt extrusion of the plastic waste material in a hot-melt extruder in the presence of a depolymerisation agent and one or more inorganic salts, which are additional to the depolymerisation agent. The one or more inorganic salts act as both a plasticiser and a porogen during the hot-melt extrusion process.

Firstly, as a plasticiser, the inorganic salt facilitates plasticisation of the plastic waste material/polyester during the hot-melt extrusion process, thereby facilitating penetration of the depolymerizing agents into the plastic waste material and into the polyester. This results in the depolymerization of polyester to lower molecular weight polyester chains and an enhanced conversion of the polyester into monomers than would be otherwise be obtained in the absence of the salt(s). In other words, the inorganic salt increases the degree of depolymerisation of the polyester, resulting in a more efficient conversion of the polyester into monomers and yielding a lower amount of residual polyester that has a lower molecular weight than would otherwise be the case in the absence of the plasticising salt. The presence of the inorganic salt also eliminates the need for solvent-based plasticisers. This allows for simple processing and recovery of the extruded reaction products, which are in powder form, with no need for high volumes solvent based long duration processes and complex solvent extraction steps.

Secondly, as a porogen (i.e. a pore-forming agent), the inorganic salt causes the formation of pores in the residual polyester that is obtained from the extrusion process. This is because the salt penetrates the plastic waste material during the extrusion process and salt crystals are incorporated into the residual polyester material that remains following the initial depolymerisation by extrusion. The spaces occupied by these salt crystals define pores in the residual polyester. Following extrusion, the salt may be washed out of the pores in one or more subsequent washing steps, for example by dispersing the reaction mixture obtained from the extrusion process in water, thereby leaving vacant pores in the residual polymer material.

Advantageously, these pores, together with the lower molecular weight and reduced quantities of the residual polyester, render the residual polyester material obtained from the extrusion process particularly amenable to enzymatic depolymerisation, whether by isolated enzymes, cocktails/mixtures of enzymes, or by microbes that produce enzymes capable of depolymerising polyester (e.g. polyesterases such as PETases), thereby providing an environmentally friendly and almost complete degradation of the polyester plastic waste material. These properties of the residual polyester also make it particularly suitable for use as a feedstock for biopolymer production, which again may be accomplished using enzymes or microbes.

Although the majority of global polyester plastic waste is PET waste material, the method of the invention is also capable of depolymerising other polyesters, for example poly(butylene terephthalate), poly(ethylene naphthalate), polylactic acid (PLA), polycaprolactone (PCL), Polyhydroxyalkanoates (PHAs), polyhydroxybutyrate (PHB), and mixtures thereof. The plastic waste material may therefore comprise one or more of the aforementioned polyesters, including PET, or combinations thereof, and the terms "polyester plastic waste material" and "polyester waste material" refer to waste material that comprises at least one polyester, typically PET. The term "polyester" is to be understood to include polymers that contains the ester functional group between each repeat unit of the main chain, as is conventionally the case. The methods of the present invention can also be employed to recycle PET and/or other polyesters mixed with other materials, including but not limited to low density polyethylene (LDPE), polyvinyl alcohol, polypropylene, polystyrene, additives and pigments such as carbon black and green pigments, and combinations thereof. The polyester plastic waste material that is processed by the invention therefore comprises one or more polyesters, and may additionally comprise one or more other materials such as those identified above. Typically, polyester plastic waste material comprises at least 60%, by weight, polyester (e.g. at least 60%, by weight, PET), and may for example comprise at least 80%, by weight, polyester. In particular, the plastic waste material may be post-consumer plastic waste material, such as plastic waste material from used drinks bottles, and from used pots, tubs and trays (PTTs). Post-consumer plastic waste is plastic waste that has been previously used in consumer items such as a drinks bottles, pots, tubs, and trays or other plastic consumer items. The residual polyester that remains after the extrusion process may also comprise one or more other materials, such as mentioned above, in addition to polyester, and may therefore also be referred to more generally as residual plastic material or residual polyester material.

Hot-melt extrusion is widely used in plastics processing and involves heating the extrusion components, which include the polymer material, within the hot-melt extruder to form a melt in order to effect molecular level mixing and structural organisation of the chains of the polymer material with the other extruded components. Hot-melt extrusion therefore typically involves heating an extrusion mixture comprising the various extrusion components within the extruder to a temperature sufficient to form a melt comprising the extrusion components. The extrusion mixture may therefore be heated to a temperature sufficient to melt the polyester/plastic waste material. For example, the extrusion mixture may be heated to a temperature of at least the melting point temperature of the polyester. When the polyester is or comprises PET the extrusion mixture may be heated to a temperature of at least about 240°C, for example at least about 250°C. The melt comprises the plastic waste material together with the other extrusion components, which mix with the plastic waste material in its molten form and interact within modified chain arrangements. The plastic waste material/extrusion mixture is therefore heated sufficiently to melt the plastic waste material during the hot-melt extrusion process. The extruded components/extrusion mixture may therefore be heated to a temperature in excess of the melting point of the plastic waste material during extrusion to form the melt. The extruder may subject the extrusion mixture to progressively increasing temperatures as the reaction mixture passes through the extruder. For example, the extruder may comprise a series of at least two heating zones, with the heating zones progressively increasing in temperature, i.e. each of the heating zones is set to a temperature that is higher than the previous heating zone so that the temperature within the extruder progressively increases from the first to the last heating zone. Progressively heating the extrusion mixture in this way facilitates good mixing during the extrusion process. In particular, when the polyester is or comprises PET, the temperatures of the heating zones within the extruder are preferably in the range of 220°C to 270°C as this ensures that the PET is fully melted and reacts efficiently with the depolymerisation agent. For example, when an extruder having a series of heating zones is used each of the heating zones is preferably set to a temperature within the range of 220°C to 270°C. The temperature of the hottest heating zone may be at least about 250°C for PET to ensure that the PET is melted. More generally, the temperature of the hottest heating zone is preferably higher than the melting temperature of the plastic waste material. For example, in a reactive extruder machine having 5 heating zones the zones may be set to the following temperatures for processing PET waste material; zone-1 (220 °C) / zone-2 (240 °C) / zone-3 (250 °C) / zone-4 (260 °C) / zone-5 (270 °C). In another example, in a reactive extruder machine having 8 heating zones the zones may be set to the following temperatures for processing PET waste material: zone-1 (220 °C) / zone-2 (230 °C) / zone-3 (230 °C) / zone-4 (240 °C) / zone-5 (250 °C) zone-6 (260 °C) / zone-7 (265 °C) / zone-8 (270 °C).

In the context of the present invention, the plasticiser is provided in the form of the one or more inorganic salts, which serve to plasticise the plastic waste material, to promote mixing of the extrusion components, and to facilitate access to chain depolymerisation bond sites. In particular the plasticiser facilitates penetration of the depolymerisation agent into the plastic waste material/polyester, thereby enhancing the degree of depolymerisation and reducing the reaction times. In contrast to solvent-based methods, the polyester/plastic waste material is not solvated during the depolymerisation/hot-melt extrusion process. Instead, mixing of the polyester with the depolymerisation agent and the other extrusion components is achieved by heating the extrusion mixture to form a melt comprising the extrusion components and plasticising the plastic waste material using the inorganic salt(s), thereby allowing effective penetration of the depolymerisation agent and any catalysts etc. into the plastic waste material and into the polyester, providing access to sites for chemical reaction (i.e. ester bond linkages). The use of solvents in sufficient quantities to dissolve or solvate the polyester is therefore not required, and the extrusion mixture/melt may therefore be absent of a sufficient amount of solvent to achieve solvation of the polyester, and may in fact be substantially free of solvents capable of solvating the polyester under the hot-melt extrusion conditions. In other words, during the hot-melt extrusion process the polyester is not in solution but is instead in a melt.

The extrusion process is preferably performed under induced shear conditions and is therefore preferably performed in a screw extruder, such as a twin-screw extruder. The use of a twin-screw extruder is particularly preferred as this results in enhanced shear and a more effective mixing of the extrusion components. The induced shear conditions within a screw extruder facilitate the penetration of the depolymerisation agent, the salt, and any catalysts into the polyester waste material by reducing the viscosity of the polyester waste material by disentangling the polymer chains, freeing them from alignment and dispersing crystalline and amorphous polyester formations. The method of the invention therefore employs a mechanochemical process to depolymerise polyester with further enhancement provided by the addition of the one or more inorganic salts to facilitate plasticisation of the plastic waste material/polyester. When the method is performed using a screw extruder, in particular when performed using a twin-screw extruder, the screw speed of the reactive extruder is preferably in the range of 100 to 250 rpm, or 5 to 12 Hz. Particularly preferably, the screw speeds are about 150 rpm or about 7 Hz. These screw speeds have been found to promote effective flow of the extrusion mixture through the extruder without causing the extrusion mixture to pass through the extruder too quickly.

The method generally involves performing hot-melt extrusion of an extrusion mixture, otherwise known as a precursor mixture, comprising the extrusion components, namely the polyester plastic waste material, at least one depolymerisation agent, and the one or more inorganic salts (which are present in addition to the depolymerisation agent). The polyester is depolymerised by the depolymerising agent(s) during the extrusion process to yield monomers of the polyester and residual polyester material that has not been fully depolymerised into monomers. The hot-melt extrusion process therefore yields an extruded reaction mixture comprising reaction products comprising one or more monomers of the polyester and usually also residual polyester material that has not been fully depolymerised into monomers during the extrusion process. The hot-melt extrusion may be performed as a continuous process, with the extrusion components continuously fed into the extruder in the required proportions and/or quantities. The extrusion mixture, or the components thereof, may therefore be continuously fed into the extruder.

The extrusion/precursor mixture components (i.e. the extrusion components) may be mixed together before being introduced into the extruder, or they may be introduced to the extruder separately and mixed within the extruder. Either way, the method comprises feeding each of the components into an extruder, either separately or together, and hot-melt extruding the components together as a mixture in the extruder to depolymerise the polyester. The extrusion/precursor mixture may consist essentially of components that are solid phase at room temperature and pressure (i.e. at 25 °C and 1 atmosphere pressure) and may therefore be a solid-phase extrusion mixture, which may, for example, be in the form of a powder. This is particularly the case for hydrolysis, where the depolymerisation agent is generally a solid at room temperature and pressure. Alternatively, one or more of the components of the extrusion mixture, such as the depolymerisation agent when depolymerisation is achieved by glycolysis, may be a liquid at room temperature and pressure. An advantage of performing the hot-melt extrusion step of the method is that it can yield an extruded reaction mixture that is substantially solid phase at room temperature and pressure, particularly when depolymerisation is achieved by hydrolysis. In other words, the reaction mixture obtained from the extrusion may consist essentially of solid-phase components and may, for example, be in the form of a powder at room temperature and pressure. This makes handling and separation of the reaction products simpler and removes the need to extract solvents or the like from the reaction mixture. Instead, simple steps such as washing, filtering, precipitation and crystallisation can be used to separate and purify the reaction products, namely the residual polyester material and monomers.

The polyester may be depolymerised by the depolymerisation agent by either hydrolysis, in particular alkaline/base hydrolysis, or glycolysis. The depolymerisation agent is therefore capable of depolymerising the polyester (i.e. breaking the ester bond linkages of the polyester) under the hot-melt extrusion reaction conditions within the extruder by hydrolysis or glycolysis. Specifically, the depolymerisation agent is a reagent in the depolymerisation reaction, which is either hydrolysis or glycolysis of the polyester. The depolymerisation agents therefore promote either hydrolysis or glycolysis of the polyester. Various polyester depolymerisation agents are known in the art.

Hydrolysis may be either acid or base hydrolysis, but base hydrolysis is preferred due to the generally higher boiling points of base hydrolysis agents making them more amenable to hot-melt extrusion. If the polyester is depolymerised by base hydrolysis then the depolymerisation agent may be a base. In particular, the depolymerisation agent may be a hydroxide, i.e. a compound comprising hydroxide ions. Such compounds are capable of hydrolysing ester bond linkages under anhydrous and solvent-free conditions as they do not require water to produce the hydroxide ions required to cleave the ester bond linkages of the polyester. Preferably, the depolymerisation agent is a hydroxide of a monovalent cation (i.e. a singly positively charged cation), such as an alkali metal (Group I metal) cation or another monovalent cation such as the ammonium ion. The depolymerisation agent may, for example, be sodium hydroxide, potassium hydroxide, or ammonium hydroxide, which are all hydroxides of monovalent cations that are commonly used in the hydrolysis of polyesters. The use of a hydroxide of a monovalent cation is advantageous because the dicarboxylic acid (diacid) monomers of the polyester, e.g. terephthalic acid in the case of PET, form salts most effectively with monovalent cations due to the singly-charged nature of the deprotonated carboxyl groups. However, other suitable hydroxides may also be used, such as hydroxides of divalent cations such as alkaline earth metals. Although alkaline earth metal ions are divalent (i.e. double positively charged) they are nevertheless stable counterions and behave similarly to alkali metal ions in solution making them an acceptable substitute. More than one depolymerisation agent may be present, and the extrusion mixture may comprise one or more depolymerisation agents. For example, a mixture of different hydroxides may be used, or a nonhydroxide base may also be present, such as sodium carbonate, to reduce the amount of caustic hydroxide that is required to perform the hydrolysis.

Hydrolysis of polyester yields dicarboxylic acid (diacid) monomers and glycol (diol) monomers. In the case of PET, the diacid monomers are terephthalic acid and the glycol monomers are ethylene glycol. The diacid may be present in salt form following depolymerisation by alkaline hydrolysis, in particular as the salt of the hydroxide cation. For example, if sodium hydroxide is used as the depolymerisation agent the diacid may be in the form of the sodium salt of the diacid.

If the polyester is depolymerised by glycolysis the depolymerisation agent may be a glycol, otherwise known as a diol. In particular, the glycol may be a monomer of at least one of the polyesters present in the plastic waste material. For example, if the polyester is PET the glycol may be ethylene glycol (EG). Glycolysis depolymerises polyester to yield diester monomers, namely diesters of the dicarboxylic acid and the glycol monomers of the polyester. For example, if the polyester is PET then glycolysis yields bis(2-hydroxyethyl) terephthalate (BHET) monomers.

It has been reported that for glycolysis the ideal ratio of glycol to polyester (e.g. EG:PET) to obtain almost complete depolymerization of the polyester is 4:1 to 6:1. However, it is not generally possible to reach these high ratios when using hot-melt extrusion due to the low viscosity of EG, which does not incorporate into the melt very well and instead tends to flow out of the extruder. The presence of the salt(s) allows the ratio of the glycol to the polyester plastic waste material in the extrusion mixture to be increased to levels that are otherwise not achievable by increasing the viscosity of the extrusion mixture. For example, the ratio of the amount by weight of the glycol in the extrusion mixture to the amount by weight of the plastic waste material in the extrusion mixture may be at least 0.2:1, preferably at least 0.4:1, more preferably at least 0.6:1, and even more preferably at least 0.8:1. These amounts refer to the amounts of the plastic waste material/glycol initially present in the extrusion mixture. In other words, the ratio of the amount by weight of the glycol that is fed into the hot-melt extruder to the amount by weight of the plastic waste material that is fed into the hot-melt extruder may be any of these ratios. These higher ratios of glycol to polyester result in more chain scissions by glycol and thus more depolymerization of the polyester.

The hot-melt extrusion may also be performed in the presence of a depolymerisation catalyst, particularly if glycolysis is the method of depolymerisation. In other words, the extrusion components/extrusion mixture may comprise a catalyst. Suitable glycolysis catalysts include urea, zinc acetate, zinc chloride, glycerol, thiourea, and combinations thereof. In particular, a preferred depolymerisation catalyst is a hybrid catalyst comprising urea and zinc acetate. Other hybrid catalysts may also be used, such as zinc chloride and glycerol, and zinc chloride and thiourea. The hybrid catalyst may be a deep eutectic solvent (DES) that provides the dual function of both of the catalyst species (e.g. urea and zinc acetate) during the interaction with the polymer chains and the depolymerising agent. Deep eutectic solvents are considered to be "green" solvents and comprise a eutectic mixture of two compounds, a hydrogen bond acceptor such as metal chlorides and a hydrogen bond donor such as urea. Generally, DESs show low-volatility and are often liquid at room temperature. In the context of PET depolymerization reactions, DESs form hydrogen bonds with the used depolymerization agents and the polymer chain and thus increase the depolymerization efficiency of PET. The catalyst may therefore comprise a eutectic mixture of two depolymerisation catalysts. In other words, the catalyst may be or may comprise a DES. The DES may comprise a first component selected from zinc acetate and zinc chloride, and a second component selected from urea, thiourea and glycerol. In particular, the DES may comprise urea and zinc acetate, zinc chloride and glycerol, or zinc chloride and thiourea. The inclusion of a catalyst, whether a DES or otherwise, improves the glycolysis reaction and increases the yield of the produced BHET.

The use of the inorganic salt(s) in combination with performing the reaction under hot-melt extrusion conditions increases the degree of depolymerisation and the purity of the separated monomers compared to performing hot-melt extrusion in the absence of the salt. The salt also allows the solvent that is typically used to solvate or plasticise the polyester during conventional depolymerisation methods (e.g. solution-based methods) to be dispensed with or reduced to much lower amounts below the quantities required to solvate the polyester. Instead, the polyester is plasticised by the inorganic salt and the hot-melt extrusion conditions, and the ester bond linkages and polymer chains are made accessible for depolymerisation without the need for a solvent that is capable of solvating or dissolving the polyester during the hot-melt extrusion process, i.e. under the hot-melt extrusion reaction conditions. The plastic waste material may therefore be extruded in the absence of a solvent capable of solvating or dissolving the polyester during the hot-melt extrusion process. In the present context, the solvent is separate and distinct from the depolymerisation agent, and the precursor mixture may therefore be substantially free of solvents other than the depolymerisation agent, such as the diol/glycol used as the depolymerisation agent in glycolysis reactions, and the catalyst, such as a DES. In other words, the extrusion components/melt may be substantially free of solvents other than the depolymerisation agent and/or catalyst(s). As used herein, substantially free typically means that the combined amount of any solvents is less than 5% by weight, preferably less than 1% by weight of the relevant composition. Solvents typically used to solvate the polyester during depolymerisation include water and monoalcohols such as methanol, ethanol, propanol and phenol. The precursor mixture/melt may therefore be substantially free from (i.e. comprise less than 5% by weight of) water and monoalcohols such as methanol, ethanol, propanol and phenol. The plastic waste material/precursor mixture may therefore be extruded under anhydrous conditions and/or in the absence of monoalcohols.

The inorganic salts used in the method of the invention are therefore inorganic salts that are capable of plasticising, or facilitating plasticisation, of the polyester plastic waste material. In other words, the one or more inorganic salts are used as a polyester plasticiser/plasticising agent. The salt(s) act under the induced shear conditions experienced during hot-melt extrusion to disentangle the polymer chains of the plastic waste material, thereby facilitating penetration of the depolymerisation agent (and any catalysts) into the plastic waste material and increasing the contact of the depolymerisation agent with the molten polymer reaction sites which increases the efficiency of depolymerization. The inorganic salts are preferably substantially inert under the hot-melt extrusion conditions, meaning that the ions of the salt do not react other than to form ionic bonds during the hot-melt extrusion process. **In** other words, the ions of the inorganic salt do not change in chemical composition during the hot-melt extrusion and do not therefore produce further chemical species that must be separated from the reaction products following depolymerisation, thereby simplifying purification. The salt(s) are also preferably crystalline. Such salts include, for example, inorganic metal salts such as alkali metal salts and alkaline earth metal salts. As used herein, the term alkali metal refers to a metal from Group I of the periodic table (e.g. lithium, sodium, potassium, etc.) and the term alkaline earth metal refers to a metal from Group II of the periodic table (e.g. magnesium, calcium etc.). The extrusion components/extrusion mixture may therefore comprise one or more inorganic salts selected from alkali metal salts and alkaline earth metal salts, i.e. salts of alkali metals and salts of alkaline earth metals. **It** is also possible to use other monovalent or divalent metal salts. More generally, is preferable for the inorganic salts to be salts of monovalent cations so that they can effectively form salts with the diacid monomers that are produced by hydrolysis. Therefore, it is preferable for each of the one or more inorganic salts to be a salt of a monovalent cation. For this reason, salts of alkali metals are preferred over salts of alkaline earth metals. In particular, the one or more inorganic salts may be sodium salts, with sodium chloride being a particularly preferred example. This is particularly so when sodium hydroxide is used as the depolymerisation agent because the cation is then common between the depolymerisation agent and the inorganic salt, therefore reducing the number of chemical species/ions in the reaction mixture and simplifying separation and purification of the depolymerisation products. For this reason, it is generally preferable when the depolymerisation agent comprises a cation (e.g. when it is a hydroxide of a cation) for the one or more inorganic salts to each comprise the same cation as the depolymerisation agent, i.e. for each of the one or more inorganic salts to be a salt of the cation of the depolymerisation agent (e.g. of the hydroxide). Salts of cations other than alkali and alkaline earth metals may also be used, and the one or more inorganic salts may include, for example, one or more ammonium salts.

Suitable anions include chloride, sulphate, carbonate and bicarbonate salts, particularly chloride salts. The one or more inorganic salts may therefore include chloride, sulphate, carbonate and/or bicarbonate salts, for example chloride, sulphate, carbonate and/or bicarbonate salts of alkali metals or other monovalent cations, in particular of sodium. For example, the one or more inorganic salts may be selected from the group consisting of sodium chloride, sodium sulphate, sodium carbonate and sodium bicarbonate.

The total (combined) amount of the one or more inorganic salts in the extrusion mixture may be at least 20%, by weight, of the extrusion mixture. These amounts refer to the amounts of the combined amounts of the inorganic salts initially present in the extrusion mixture. In other words, the total (combined) amount, by weight, of the one or more inorganic salts that are fed into the hot-melt extruder may be at least 20% of the total (combined) amount, by weight, of all of the components that are fed into the hot-melt extruder (i.e. of the extruded components). For example, the total amount of the one or more inorganic salts initially present in the extrusion mixture may be at least 30%, by weight, of the extrusion mixture, preferably at least 40%, by weight, of the extrusion mixture. These amounts of salt provide particularly effective plasticisation of the plastic waste material/polyester and have been shown to result in a high degree of depolymerisation and a high degree of monomer purity.

The total amount, by weight, of the one or more inorganic salts initially present in the extrusion mixture may be at least equal to the amount, by weight, of the plastic waste material initially present in the extrusion mixture. In other words, the total amount, by weight, of the one or more inorganic salts that are fed into the hot-melt extruder may be at least equal to the amount, by weight, of the plastic waste material that is fed into the hot-melt extruder. The total amount, by weight, of the one or more inorganic salts in the precursor mixture may, for example, be at least 1.2 times (120%) the amount by weight of the plastic waste material in the precursor mixture, preferably at least 1.3 times (130%) the amount by weight of the plastic waste material in the precursor mixture, even more preferably at least 1.4 times (140%) the amount by weight of the plastic waste material in the precursor mixture. Again, these amounts of salt provide particularly effective plasticisation of the plastic waste material/polyester and have been shown to result in a high degree of depolymerisation and a high degree of monomer purity.

As mentioned previously, the method of the invention results in a particularly high degree of depolymerisation of the polyester. In particular, the hot-melt extrusion may result in depolymerisation of at least 80% by weight of the polyester (e.g. PET) initially present in the plastic waste material, and often at least 90% by weight of the polyester. In other words, the depolymerisation of the polyester by hot-melt extrusion may result in at least 80% weight loss of the polyester in the plastic waste material. This weight loss is relative to the amount by weight of the polyester initially present in the plastic waste material in the precursor mixture/fed into the extruder. Put another way, the depolymerisation of the polyester by hot-melt extrusion may result in the amount, by weight, of the polyester in the plastic waste material reducing by at least 80%. The weight loss/degree of depolymerisation of the polyester in the plastic waste material is measured by measuring the amount, by weight, of the residual (undepolymerised) plastic material that remains following hot-melt extrusion and comparing this to the amount, by weight, of the plastic waste material initially present in the extrusion mixture/fed into the extruder. The degree of depolymerisation, in terms of the percentage weight loss of the plastic waste material, may be calculated according to the following equation:

$$\textbf{\textit{polyester weight loss}}\ (\%) = \frac{I_{total} - R_{total}}{I_{polyester}}\ \textbf{x 100,}$$

where $I_{total}$ is the total amount, by weight, of the plastic waste material initially present in the extrusion mixture, $R_{total}$ is the total amount, by weight, of residual plastic waste material present in the reaction mixture after hot-melt extrusion, and $I_{polyester}$ is the total amount, by weight, of the polyester initially present in the plastic waste material (e.g. the total amount, by weight, of PET initially present in the plastic waste material prior to hot-melt extrusion). $R_{total}$ is generally determined by isolating the residual plastic material from the reaction mixture following hot-melt extrusion and using the weight of the isolated residual plastic waste material as $R_{total}$.

Therefore, put another way, the amount of residual plastic material present in the extruded reaction mixture obtained from the depolymerisation of the polyester by hot-melt extrusion may be less than 20% by weight of the amount of the plastic waste material initially present in the extrusion mixture/fed into the extruder, preferably less than 10% by weight of the amount of the plastic waste material initially present in the extrusion mixture/fed into the extruder.

In order to increase the degree of depolymerisation of the polyester, the extruded reaction mixture may be re-extruded, for example by re-feeding the reaction mixture into the extruder to perform reactive extrusion of the reaction mixture. In other words, the method may comprise a further step of performing hot-melt extrusion of the extruded reaction mixture, for example by re-feeding the extruded reaction mixture back into the extruder. Re-extrusion of the reaction mixture may be particularly beneficial if the extruded reaction mixture that results from the first hot-melt extrusion step still contains melted polyester plastic waste material that has not been fully depolymerised. The reaction conditions within the extruder during the re-extrusion step may be the same or substantially the same as during the first extrusion step, and the re-extrusion of the reaction mixture may simply comprise re-feeding the reaction mixture back into the extruder.

As mentioned previously, the hot-melt extrusion process yields an extruded reaction mixture comprising one or more monomers of the polyester (which may be in the form of a salt) and residual polyester/plastic waste material, which can then be separated and purified using simple techniques with very few steps and no need for complex solvent extraction etc. The method may, for example, further comprise separating the residual polyester/plastic material from the reaction mixture. This may be achieved by performing a separation procedure comprising dispersing the reaction mixture in water and filtering the resulting dispersion to obtain the residual polyester as a residue. The residue may then optionally be washed, for example in distilled water. The resulting filtrate comprises the monomers, and the method may further comprises separating the monomers from the filtrate, for example by performing a separation procedure comprising crystallising and/or precipitating the monomers from the filtrate. The crystallised and/or precipitated monomers may then be filtered out of the filtrate and collected as a residue, which may then optionally be washed, for example in distilled water. In particular, when depolymerisation proceeds via hydrolysis, the separation of the monomers from the filtrate may comprise acidifying the filtrate to precipitate dicarboxylic acid (e.g. terephthalic acid, or TPA) monomers. When depolymerisation proceeds via glycolysis the separation of the monomers from the filtrate may comprise concentrating the filtrate and crystallising diester (e.g. BHET) monomers. The separated monomers may then be repolymerised into virgin polyester, such as PET, and may be used in the production of new products without compromising on the properties of the polyester.

The purity of the separated monomers (e.g. TPA or BHET) may be increased using a purification method or protocol that includes recrystallisation of the monomers. For example, TPA may be purified by recrystallising the TPA crystals using a suitable solvent such as dimethylacetamide (DMAc). The purification method may further comprise using activated carbon to remove colour from the monomer crystals. For example, the purification method may comprise recrystallising the monomer crystals by dissolving the crystals in a suitable solvent together with activated carbon and filtering out the activated carbon before recrystallising the monomer.

As previously mentioned, the residual polyester/plastic waste material is obtained in relatively small amounts from the hot-melt extrusion process and has properties, namely low molecular weights and a porous surface morphology, that lend it to efficient enzymatic degradation. The method may therefore further comprise enzymatically depolymerising the residual polyester obtained from the hot-melt extrusion of the precursor mixture. For example, the residual polyester may be enzymatically depolymerised by one or more enzymes (polyesterases such as PETase and MHETase) capable of depolymerising the residual polyester. The residual polyester may be enzymatically depolymerised using one or more isolated enzymes capable of depolymerising the polyester, and the residual polyester may therefore be mixed with one or more enzymes to depolymerise the residual polyester. Alternatively, the residual polyester may be enzymatically depolymerised using one or more microbial strains, in particular those that produce polyesterases. Enzymatic degradation may yield monomers of the polyester (e.g. TPA and/or BHET). The microbial strains (e.g. *Ideonella sakaiensis, Thermobifida fusca, Pseudomonas mendocina*) may have previously been isolated from microbial consortia, or from landfill or other plastic-polluted waste environments, where they have evolved to use polyester waste material as a carbon source. Another possibility is the use of the residual polyester or the monomers that are obtained from the enzymatic depolymerisation of the residual polyester as a feedstock for biopolymer production, which may be achieved using one or more microbial strains. In such implementations the microbes are used to convert the residual polyester/obtained monomers into one or more biopolymers, such as bacterial cellulose (BC) and/or polyhydroxyalkanoates (PHAs).

Surprisingly, using TPA obtained from the reactive extrusion process described herein as a feedstock for BC production using microbes (e.g. microbial species belonging to the genus *Komagataeibacter*) has been found to provide higher yields of BC, decreasing amount of glucose needed in the process. This is useful because BC is commonly produced in glucose-based fermentation media, which makes it a difficult process to up-scale. BC has gained great attraction from several research and industrial sectors due to its high purity, absence of lignin and hemicellulose commonly found in plant cellulose, and its exclusive properties. The crystalline structure of BC is naturally composed of randomly assembled nanofibrils aggregated in bundles. Such arrangement allows a great surface area that provides BC with high liquid holding capacity, flexibility, mouldability, and high mechanical strength in the wet state. Furthermore, BC is considered a biocompatible material which renders it suitable for a wide range of applications, especially in the biomedical field, such as wound healing systems BC-based biosensors, tissue regeneration, scaffolds, and transdermal applications. One of the most attractive genera that has been studied for BC production is *Komagataeibacter.* Species belonging to this genus are well-recognized, exceptionally efficient BC producers known for its phenotype diversity manifested by preference of the carbon source, BC structure and production rate depending on the strain.

The invention therefore also provides the use of TPA obtained from the reactive extrusion process described herein as a feedstock for BC production using microbes such as those belonging to the *Komagataeibacter* genus. More specifically, the TPA may replace some or all of the glucose that is conventionally used as the feedstock in biopolymer production. The TPA may therefore be used as a glucose substitute in feedstocks for BC production. For example, the feedstocks may comprise glucose and TPA obtained from the reactive extrusion process described herein.

The method may therefore comprise subjecting the residual polyester to enzymatic degradation using enzymes, enzymatic cocktails/mixtures or microbial strains such as those isolated and enriched from plastic-polluted environments. These enzymes, enzymatic cocktails/mixtures or microbial strains may be selected based on their ability to utilise polyester, such as PET, as a carbon source. Selected enzymes and enzymatic cocktails/mixtures may also comprise enzymes targeted at other contaminant and polymer materials that are present in the residual polyester material. The monomers that are yielded from enzymatic degradation may then be collected for repolymerisation or used as a substrate for the production of biopolymers such as PHAs and/or bacterial cellulose.

The further degradation of the relatively small amounts of residual polyester produced by the extrusion step by enzymes/microbes represents an environmentally friendly and low-carbon means of achieving almost complete degradation and re-use of polyester plastic waste material. The method of the invention therefore provides a pathway for almost complete circularity of polyester plastic waste material, which results in almost no loss of plastic waste material and very little harm to the environment, particularly compared to alternative methods.

Examples

*Methods*

Example 1

20 g of PET granules, 9 g sodium hydroxide, and 30 g sodium chloride were put into a plastic bag and mixed thoroughly. The mixture was then fed into a twin-screw extruder that was heated to a temperature of 250°C and operated with a screw rotational speed of 20 rpm for a period of 3 mins. The obtained reaction mixture was dispersed in excess distilled water, and the residual PET was filtered out of the dispersion and dried at 70°C overnight. The filtrate containing the disodium terephthalate salt was acidified with HCl to a pH of 1-2 resulting in precipitation of terephthalic acid (TPA), which was separated from the filtrate by filtration, washed with distilled water, and dried at 70°C overnight.

Reference Example 1

20 g of PET granules and 9 g sodium hydroxide were put into a plastic bag and mixed thoroughly. The mixture was then fed into a twin-screw extruder that was heated to a temperature of 250°C and operated with a screw rotational speed of 20 rpm for a period of 3 mins. The obtained reaction mixture was dispersed in excess distilled water, and the residual PET was filtered out of the dispersion and then dried at 70°C overnight. The filtrate containing the disodium terephthalate salt was acidified with HCl to a pH of 1-2 resulting in precipitation of TPA, which was separated from the filtrate by filtration, washed with distilled water, and dried at 70°C overnight.

Example 2

20 g of PET granules, 20 ml of ethylene glycol, 0.4 g urea and 30 g sodium chloride were put into a plastic bag and mixed thoroughly. The mixture was then fed into a twin-screw extruder that was heated to a temperature of 250°C and operated with a screw rotational speed of 20 rpm for a period of 3 mins. The obtained reaction mixture was dispersed in excess distilled water, and the residual PET was filtered out of the dispersion and dried at 70°C overnight. Meanwhile, the collected filtrate was poured into a 1000 ml volumetric flask to constant volume. The filtrate was then concentrated to 60 ml and the concentrated filtrate was stored in a refrigerator overnight. White needle-like crystals of BHET were formed, which were filtered out of the concentrated filtrate and dried.

Example 3

20 g of PET granules, 20 ml of ethylene glycol, 0.4 g zinc acetate and 30 g sodium chloride were put into a plastic bag and mixed thoroughly. The mixture was then fed into a twin-screw extruder that was heated to a temperature of 250°C and operated with a screw rotational speed of 20 rpm for a period of 3 mins. The obtained reaction mixture was dispersed in excess distilled water, and the residual PET was filtered out of the dispersion and dried at 70°C overnight. Meanwhile, the collected filtrate was poured into a 1000 ml volumetric flask to constant volume. The filtrate was then concentrated to 60 ml and the concentrated filtrate was stored in a refrigerator overnight. White needle-like crystals of BHET were formed, which were filtered out of the concentrated filtrate and dried.

Example 4

20 g of PET granules, 20 ml of ethylene glycol, 0.2 g urea, 0.2 g zinc acetate and 30 g sodium chloride were put in a plastic bag and mixed thoroughly. The mixture was then fed into a twin-screw extruder that was heated to a temperature of 250°C and operated with a screw rotational speed of 6 rpm for a period of 3 mins. The obtained reaction mixture was dispersed in excess distilled water, and the residual PET was filtered out of the dispersion and dried at 70°C overnight. Meanwhile, the collected filtrate was poured into a 1000 ml volumetric flask to constant volume. The filtrate was then concentrated to 60 ml and the concentrated filtrate was stored in a refrigerator overnight. White needle-like crystals of BHET were formed, which were filtered out of the concentrated filtrate and dried.

Reference Example 2

20 g of PET granules, 20 ml of ethylene glycol and 0.4 g zinc acetate were put into a plastic bag and mixed thoroughly. The mixture was then fed into a twin-screw extruder that was heated to a temperature of 250°C and operated with a screw rotational speed of 20 rpm for a period of 3 mins. The obtained reaction mixture was dispersed in excess distilled water, and the residual PET was filtered out of the dispersion and dried at 70°C overnight. Meanwhile, the collected filtrate was poured into a 1000 ml volumetric flask to constant volume. The filtrate was then concentrated to 60 ml and the concentrated filtrate was stored in a refrigerator overnight. White needle-like crystals of BHET were formed, which were filtered out of the concentrated filtrate and dried.

Example 5

20 g of plastic granules comprising 80% w/w PET and 20% w/w polyethylene (PE), 9 g sodium hydroxide, and 30 g sodium chloride were put into a plastic bag and mixed thoroughly. The mixture was then fed into a twin-screw extruder that was heated to a temperature of 250°C and operated with a screw rotational speed of 20 rpm for a period of 3 mins. The obtained reaction mixture was dispersed in excess distilled water, and the residual PET/PE was filtered out of the dispersion and dried at 70°C overnight. The filtrate containing the disodium terephthalate salt was acidified with HCl to a pH of 1-2 resulting in precipitation of terephthalic acid (TPA), which was separated from the filtrate by filtration, washed with distilled water, and dried at 70°C overnight.

Example 6

20 g of post-consumer PET granules containing LDPE and carbon black, 9 g sodium hydroxide, and 30 g sodium chloride were put into a plastic bag and mixed thoroughly. The mixture was then fed into a twin-screw extruder that was heated to a temperature of 250°C and operated with a screw rotational speed of 20 rpm for a period of 10 mins. The obtained reaction mixture was dispersed in excess distilled water, and the residual PET/LDPE/carbon black was filtered out of the dispersion and dried at 70°C overnight. The filtrate containing the disodium terephthalate salt was acidified with HCl to a pH of 1-2 resulting in precipitation of TPA, which was filtered out of the filtrate, washed with distilled water, and dried at 70°C overnight.

Example 7

20 g of post-consumer PET granules containing LDPE and carbon black, 20 ml of ethylene glycol, 0.2 g urea, 0.2 g zinc acetate, and 30 g sodium chloride were put into a plastic bag and mixed thoroughly. The mixture was then fed into a twin-screw extruder that was heated to a temperature of 250°C and operated with a screw rotational speed of 6 rpm for a period of 3 mins. The obtained reaction mixture was dispersed in excess distilled water and the residual PET/LDPE/carbon black powder was filtered out of the dispersion and dried at 70°C overnight. Meanwhile, the collected filtrate was poured into a 1000 ml volumetric flask to constant volume and then concentrated to 60 ml. The concentrated filtrate was stored in a refrigerator overnight. White needle-like crystals of BHET were formed, which were then filtered out of the concentrated filtrate and dried.

Example 8

20 g polylactic acid (PLA) granules and 9 g sodium hydroxide were put into a plastic bag and mixed thoroughly. The mixture was then fed into a twin-screw extruder that was heated to a temperature of 190°C and operated with a screw rotational speed of 20 rpm for a period of 130 s. The obtained reaction mixture was dispersed in excess distilled water, and the residual polyester was filtered out of the dispersion and then dried at 40°C overnight.

Example 9

20 g polycaprolactone (PCL) granules and 9 g sodium hydroxide were put into a plastic bag and mixed thoroughly. The mixture was then fed into a twin-screw extruder that was heated to a temperature of 190°C and operated with a screw rotational speed of 20 rpm for a period of 150 s. The obtained reaction mixture was dispersed in excess distilled water, and the residual polyester was filtered out of the dispersion and then dried at 40°C overnight.

Example 10

Several microbial isolates, previously isolated from plastic-polluted sites, were selected according to their ability to consume PET as a carbon source and were cultivated on residual PET obtained following depolymerisation of post-consumer PET as described in Examples 6 and 7. Microbial isolates were cultivated using both solid and liquid media containing 9 g/l disodium hydrogen phosphate dodecahydrate, 1.5 g/l potassium dihydrogen phosphate, 1 g/l ammonium chloride, 0.2 g/l magnesium sulphate heptahydrate, 0.2 g/l calcium chloride dihydrate, 0.0012 g/l ammonium ferric citrate, 1 ml of trace elements solution, 25% (w/v) N-Z amine solution, and 0.5% (w/v) of residual PET as a carbon source. 15 g/l of agar was used for solid medium preparation. Incubation of isolates on the solid medium was conducted on plates for 4 weeks on 30°C. Liquid media were cultivated under similar conditions on rotary shaker (180 rpm), followed up with microbial growth estimation and HPLC analysis of cultivation medium for the detection of degradation products.

Example 11

*Komagateibacter medellinensis* ID13488 was used to produce bacterial cellulose from TPA. Used media were:

- **Example 11a:** Hestrin-Schramm (HS) medium (2% glucose, 0.5% yeast extract, 0.27% $Na_2HPO_4$ and 0.15% citric acid) (positive control),
- **Example 11b:** HS (0.5% glucose, 0.5% yeast extract, 0.27% $Na_2HPO_4$ and 0.15% citric acid),
- **Example 11c:** HS (1% glucose, 1% commercial TPA, 0.5% yeast extract, 0.27% $Na_2HPO_4$ and 0.15% citric acid)
- **Example 11d:** HS (1% glucose, 1% TPA obtained from a reactive extrusion process as described herein, 0.5% yeast extract, 0.27% $Na_2HPO_4$ and 0.15% citric acid)

For each media pH was adjusted to 4.5 and 10% pre-washed bacterial inoculum was added. All samples were incubated at 30 °C, statically, for 14 days. After 14 days obtained nanocellulose was treated with 5% NaOH, rinsed with distilled water until pH 6-7 was reached, air dried and weighted. Each experiment was performed in triplicate.

Example 12

20 g of PET, 9 g of sodium hydroxide and 30 g of sodium chloride were fed into a twin-screw extruder and hot melt extruded to depolymerise the PET. Two such experiments were performed, with the extruded reaction mixture being re-fed into the extruder in the second experiment to undergo a second reactive extrusion process. The TPA was then separated from the reaction mixtures and the TPA yield calculated.

Example 13

TPA obtained from depolymerisation of PET by hot-melt extrusion in accordance with the present disclosure was dissolved in dimethylacetamide (DMAc) at the solvent's boiling point with the ratio of TPA:DMAc = 1:10 (wt.:vol.) (i.e. 1 g of TPA to 10 ml of DMAc). The mixture was mixed for 5 min once the DMAc reached its boiling point and was filtered when the mixture was hot. The filtrate was then inserted into an ice bath and the TPA allowed to recrystallise for 15 min. The TPA crystals were then collected by filtering and re-dissolved in DMAc with the same recrystallization temperature and ratios as previously. When the solution reached the boiling point of DMAc, activated carbon (AC) was added (0.1 g of AC for 10 ml of DMAc/TPA solution) and mixed for 5 min. The AC in the system was then filtered out of the mixture using a filter paper while the DMAc/TPA solution was hot and the filtrate inserted into an ice bath for further recrystallization of TPA. After the TPA was recrystallized the TPA crystals were collected by filtration, washed with excess amount of acetone and dried at 70 °C for 24 hours.

Table 1: summary of PET examples and results

| Example | PET | Post-consumer PET/LDPE/carbon black | PE | NaCL | NaOH | EG | urea | Zn acetate | Screw speed (RPM) | Extrusion time (mins) | PET weight loss (%) | Purity TPA (%) | Purity BHET (%) | $T_m$ of residual PET (°C) |
|---|---|---|---|---|---|---|---|---|---|---|---|---|---|---|
| Example 1 | 20 g | - | - | 30 g | 9g | - | - | - | 20 | 3 | 98 | 100 | | 118 |
| Reference Example 1 | 20 g | - | - | - | 9 g | - | - | - | 20 | 3 | 85 | 100 | | 178 |
| Example 2 | 20 g | - | - | 30 g | - | 20 ml | 0.4 g | - | 20 | 3 | 70.4 | | 100 | 149 |
| Example 3 | 20 g | - | - | 30 g | - | 20 ml | - | 0.4 g | 20 | 3 | 84 | | 77.2 | 135 |
| Example 4 | 20 g | - | - | 30 g | - | 20 ml | 0.2 g | 0.2 g | 6 | 3 | 90.1 | | 100 | 149 |
| Reference Example 2 | 20 g | - | - | - | - | 20 ml | - | 0.4 g | 20 | 3 | 57 | | 24.4 | 138 |
| Example 5 | 16 g | - | 4g | 30 g | 9g | - | - | - | 20 | 3 | 95.2 | 100 | | 113 |
| Example 6 | - | 20 g | - | 30 g | 9g | - | - | - | 20 | 10 | 97.4 | 100 | | 109 |
| Example 7 | - | 20 g | - | 30 g | - | 20 ml | 0.2 g | 0.2 g | 6 | 3 | 87.5 | | 100 | 146 |

*Results*

Characterization of depolymerization products

Following depolymerization of PET (examples 1-7), FTIR spectra of the separated reaction products indicated that the produced compounds were indeed TPA and BHET.

The FTIR spectra of the separated TPA samples contained a peak at 3064 cm$^{-1}$ indicating the presence of the carboxylic acid OH group, a peak at 1673 cm$^{-1}$ indicating the presence of the carboxylic acid C=O bond, and a peak at 1280 cm$^{-1}$ indicating the presence of the carboxylic acid C-O bond.

The FTIR spectra of the separated BHET samples contained a peak at 3440 cm$^{-1}$ attributed to the OH group. In addition, the FTIR spectra exhibited a C=O stretching band at 1715 cm$^{-1}$, an alkyl C-H band at 2965 cm$^{-1}$, ester C-O peaks at 1133 cm$^{-1}$ and 1276 cm$^{-1}$, and a peak at 1410 cm$^{-1}$ that is attributed to the aromatic C-H bonds found in the BHET monomer.

Notably, the BHET sample obtained from Reference Example 2 showed a somewhat different FTIR spectra from that of BHET, which is attributed to the formation of a product other than BHET.

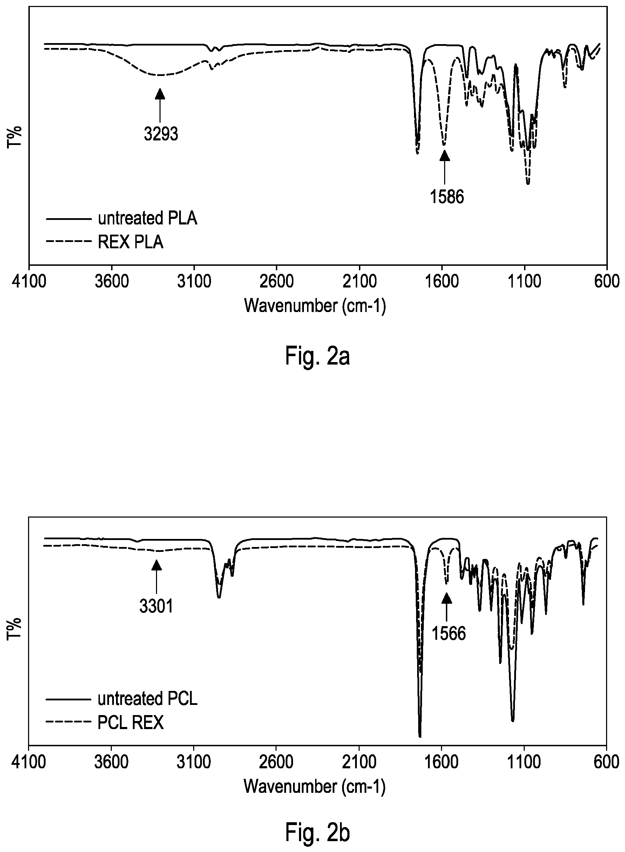

Following depolymerisation of PLA and PCL (examples 8 and 9), FTIR spectra of the reaction mixtures (shown in Figs. 2a and 2b) contained a peak at approx. 1560 cm$^{-1}$ attributable to C=O vibration of carboxylate groups produced by the hydrolysis reaction, and a broad peak at approx. 3300 cm$^{-1}$ corresponding to the expected O-H stretching vibration, indicating that depolymerisation resulted in the production of monomers. Neither of these peaks was present in the extrusion mixture prior to depolymerisation.

Degradation of PET via percentage weight loss

The percentage weight loss of the PET was calculated using the following equation:

$$\mathbf{\textit{PET weight loss}} \, (\%) = \frac{I_{total} - R_{total}}{I_{PET}} \, \mathbf{x} \, \mathbf{100,}$$

where $I_{total}$ is the total amount, by weight, of the plastic material initially present in the extrusion mixture (including PET and other materials present in the plastic component such as PE/LDPE/carbon black), $R_{total}$ is the total amount, by weight, of residual plastic material separated from the reaction mixture after hot-melt extrusion, and $I_{PET}$ is the total amount, by weight, of PET initially present in the plastic material (i.e. the amount, by weight, of PET initially present in the extrusion mixture).

Notably, PET samples that underwent mechanochemical assisted depolymerisation in the presence of the sodium chloride salt showed a greater percentage weight loss, and therefore a greater degree of depolymerisation, than those samples that underwent mechanochemical assisted depolymerisation in the absence of the salt, as set out in Table 1.

Mechanochemical assisted hydrolysis reached a 98% weight loss of original PET material in the presence of the salt (Example 1), compared to only 85% weight loss in the absence of the salt (Reference Example 1). The maximum percentage weight loss of PET via mechanochemical assisted glycolysis was 90% (Example 4). Notably, Example 3, performed in the presence of the salt, achieved an 84% PET weight loss, whereas Reference Example 2, which was performed in the absence of the salt, achieved only 57% PET weight loss under otherwise identical reaction conditions. The enhancement in the PET degradation percentage can be attributed to the plasticising effect of the salt, which allows better access for the depolymerizing agents to the PET chains, which facilitates the depolymerization process. Examples 6 and 7, which were performed on post-consumer PET/LDPE/carbon black mixtures, both showed a high degree of depolymerisation, yielding 97.4% and 87.5% PET weight loss, respectively, demonstrating the ability of the method of the invention to effectively process post-consumer PET. Likewise, Example 5, which was performed on a PET/PE mixture also showed a high degree of depolymerisation, again demonstrating that the method of the invention is able to effectively process mixed polymer waste.

The high degree of depolymerisation can be attributed to the short running time of the depolymerization process in the extruder when a salt is present, with depolymerisation taking just a few minutes, and the improved penetration of the depolymerisation agent into the PET material. The slightly lower degree of depolymerisation for the glycolysis examples can be attributed to the inherently slower rate of glycolysis compared to hydrolysis.

The presence of the sodium chloride salt allowed the weight ratio of EG:PET used in the glycolysis examples to be increased in excess of 1:1, thereby causing more chain scissions by EG and thus more depolymerization of PET.

Purity of TPA/BHET

As set out in Table 1, HPLC chromatography results indicated that most of the obtained BHET and TPA samples had a 100% purity, with only a single peak in the chromatograms having a retention time in good agreement with the retention time measured for pure TPA or BHET. This included the TPA samples obtained from Examples 5, 6 and 7, which were performed on mixed PET/PE and post-consumer PET/LDPE/carbon black mixtures, demonstrating the ability of the method of the invention to effectively process post-consumer PET and mixed polymer waste to yield high-purity monomers.

Example 3 and Reference Example 2 showed peaks other than the peak attributed to pure BHET, which could be attributed to other forms of BHET or impurities. The calculated percentage of BHET obtained from Example 3 and Reference Example 2 were 77% and 24.4%, respectively. The presence of the salt in Example 3 therefore significantly improved the purity of the obtained BHET compared to Reference Example 2, which was otherwise performed under identical reaction conditions.

DSC results for residual PET

Differential scanning calorimetry was used to determine the melting points ($T_m$) of the residual PET obtained from each of the examples. Untreated PET exhibits a sharp melting point at 249°C and the post-consumer PET material used in Examples 6 and 7 had a melting point of 250°C. Hydrolysis and glycolysis of PET via reactive extrusion resulted in depolymerisation of the polymer resulting in the formation of lower molecular weight oligomers, as demonstrated by the substantially lower melting points of the residual PET compared to untreated PET. This demonstrates that the residual PET, although not fully depolymerised into monomers, is nevertheless partially depolymerised to yield shorter chain PET oligomers that are more readily depolymerised by enzymes or microbes. Notably, Example 1 in which hydrolysis was performed in the presence of the sodium chloride salt yielded residual PET with a substantially lower $T_m$ than Reference Example 1, which was otherwise performed under identical reaction conditions but in the absence of the salt, thereby demonstrating that the presence of the salt yields shorter chain and lower molecular weight oligomers, which are more amenable for enzymatic degradation. The same effect, but to a lesser degree, was observed for glycolysis, with Example 3 yielding residual PET having a lower $T_m$ than Reference Example 2, which was performed in the absence of the sodium chloride salt but otherwise under identical reaction conditions.

SEM images of residual PET

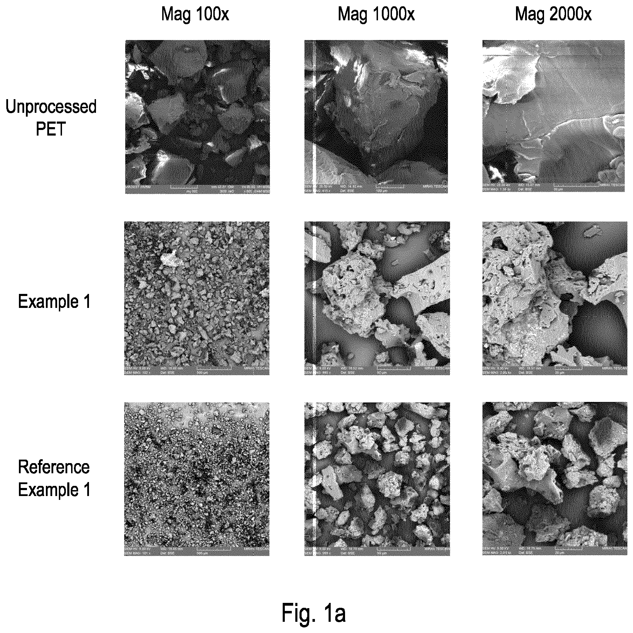

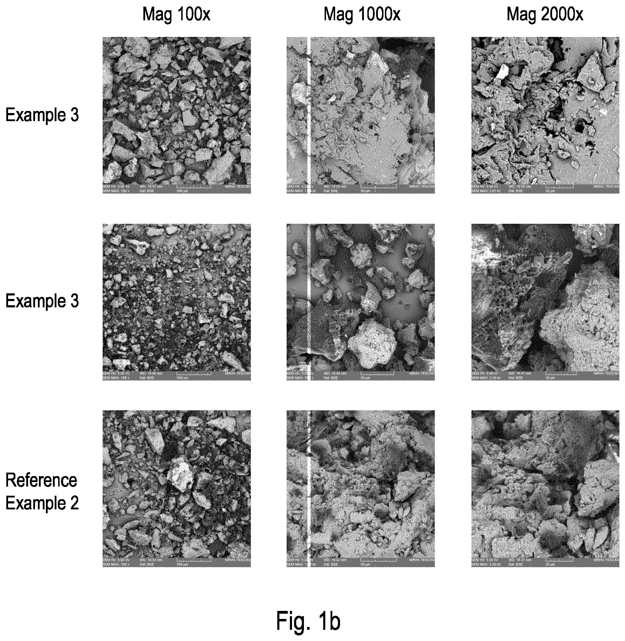

Scanning Electron Microscopy (SEM) images of the residual PET obtained in a number of the Examples are shown in Figs. 1a and 1b.

It can clearly be seen that the residual PET obtained following hydrolysis (Example 1) and glycolysis (Examples 3 and 4) have a highly porous surface morphology, with numerous dark regions corresponding to pores being identifiable in the relevant SEM images. This is in contrast to the SEM images of unprocessed PET, which clearly show a smooth, non-porous surface. Such morphological changes in the treated PET samples are favoured by bacterial strains and enzymes capable of enzymatically depolymerising the residual PET, leading to enhanced bacterial growth and a corresponding increase in the PET enzymatic degradation rate for these samples. The SEM images for Reference Examples 1 and 2 do not display the same highly porous surface morphology, demonstrating that the salt acts as an effective porogen when present in the extrusion mixture, resulting in a more porous surface morphology that is favoured for enzymatic degradation.

UV spectrophotometry

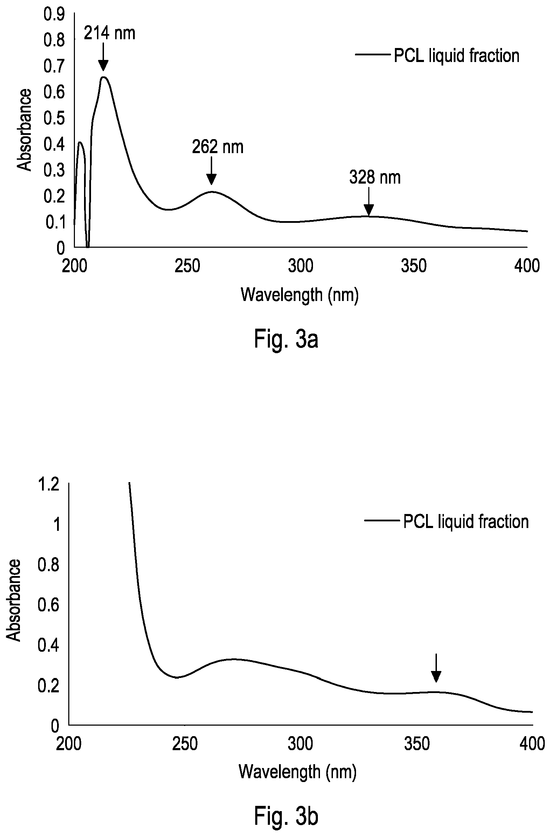

UV spectra of the liquid fractions of the reaction mixture obtained following Examples 8 and 9 contained peaks, identified in Figs. 3a and 3b, indicating the presence of dissolved oligomers and monomers resulting from the depolymerisation process.

Cultivation of microbial isolates

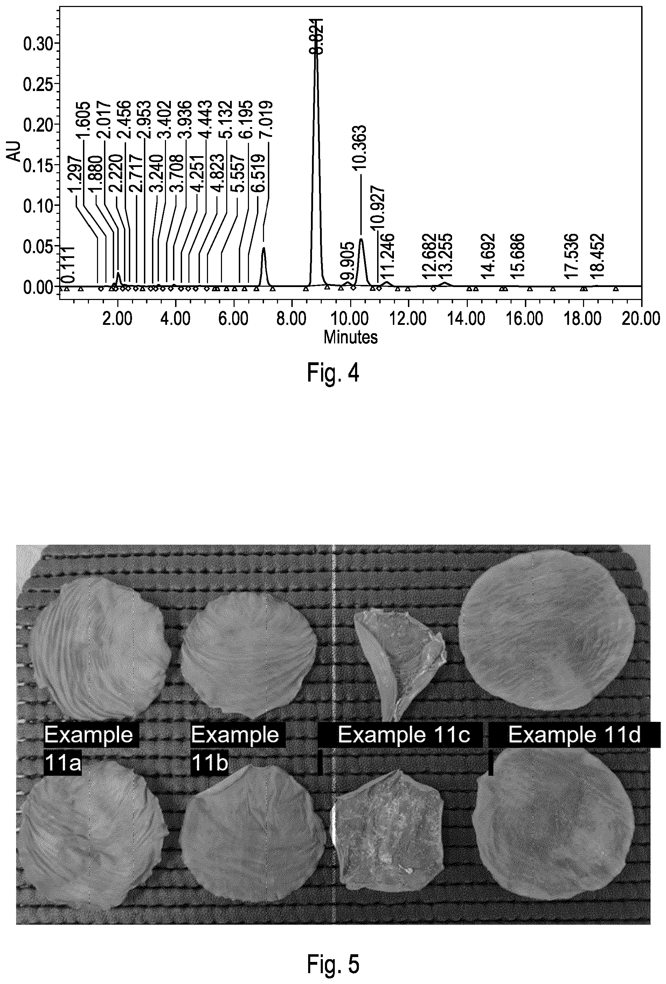

Following the incubation of isolates in Example 10, solid media results were observed as the presence of microbial growth in comparison to the control plates (the same medium without the PET substrate), which did not show microbial growth, thus demonstrating that the residual PET may be used as a carbon source by the microbial strains and is therefore amenable to enzymatic/microbial degradation. The strain that showed the best ability to grow on residual PET was identified using 16S rDNA sequencing as *Lysinomonas* sp. HPLC analysis of the *Lysinomonas* sp. DG48 strain cultivation medium showed formation of PET related monomers, namely TPA, BHET and MHET, after 3 and 4 weeks of cultivation (Fig 4; 7 min = TPA, 8.8 min = MHET, 10.3 min = BHET).

Bacterial cellulose production

It can be seen from Figure 11 that use of TPA obtained from the extrusion process (Example 11d) as a glucose feedstock substitute stimulates development of superior BC films than using glucose alone as a feedstock. The same effect was not achieved using commercially available TPA acid (Example 11c).

Re-extrusion

Re-extrusion of the extruded reaction mixture in Example 12 resulted in almost complete the depolymerization of the PET with high TPA yield (see Table 2).

**Table 2**

| Number of extrusions | Initial extrusion mixture | | | TPA yield (%) |
|---|---|---|---|---|
| | PET Sample (gr) | NaOH (gr) | NaCl (gr) | |
| Once | 20 | 9 | 30 | 79.98 |
| Twice | 20 | 9 | 30 | 98.49 |

Purification protocol

Following the purification protocol of Example 13 the TPA crystals were noticeably whiter and had reduced to 94.2% of the weight of the original (unpurified) TPA crystals, demonstrating that impurities had been successfully removed from the crystals.
The purified TPA crystals were characterised using the following methodologies:

Purity: comparison of HPLC with calibration curve of TPA sample obtained from Aldrich Inc.
NMR: $\delta$ = ½; 8.06 (s, 4H), 13.31 (s, 2H) ppm, diagram without any other impurity peak
Total metallic content: Digestion process, Al, Sb, Co, Cr, Fe, Mn, Mo, Ti,
Acid No: ASTM D8031-16 Standard Test Method for Acid Number of TPA by Automatic Potentiometric Titration
colour in 5%DMF: APHA value by spectrophotometer, %5 TPA in DMF
DSC: melting point, ratio between enthalpy of pure TPA/recycled TPA

The characterisation results are summarised in Table 3.

**Table 3**

| Property | Unit | Test method | Value | Acceptable range |
|---|---|---|---|---|
| Purity | % | HPLC | 98 | >99 |
| Organic structure correction | - | $^1$H NMR / $^{13}$C NMR | Approved | Approval |
| Total metallic content | ppm (w/w) | ICP | 4.3 | Less than 6 |
| Appearance | - | - | white | white dry powder |
| Acid no. | mg KOH/g | Titration | 674.7 | 675 $\pm$ 2 |
| colour in 5%DMF | APHA | spectrophotometer | 7.13 | < 10 |
| Melting point (sublimes) | °C | DCS | 402 | 400-405 °C |

The purified TPA sample met all criteria for high purity TPA.

**Claims**

1.  A method for processing plastic waste material comprising polyester, the method comprising:

    performing hot-melt extrusion of an extrusion mixture comprising the plastic waste material and a depolymerisation agent to depolymerise the polyester;
wherein the extrusion mixture further comprises a plasticising agent comprising one or more inorganic salts, and wherein the or each inorganic salt is selected from the list consisting of sodium chloride, lithium sulfate, lithium carbonate, lithium bicarbonate, potassium chloride, potassium carbonate, potassium bicarbonate, magnesium sulfate, magnesium carbonate, magnesium bicarbonate, and a calcium salt.

2. The method of claim 1, wherein the total amount of the one or more inorganic salts in the extrusion mixture is at least 20%, by weight, of the extrusion mixture.

3. The method of any preceding claim, wherein the total amount, by weight, of the one or more inorganic salts in the extrusion mixture is at least equal to the amount, by weight, of the plastic waste material in the extrusion mixture.

4. The method of any preceding claim, wherein each of the one or more inorganic salts is a salt of a monovalent cation; and/or
wherein the depolymerisation agent comprises a cation, and wherein the one or more inorganic salts are salts of the same cation.

5. The method of any preceding claim, wherein the one or more inorganic salts is sodium chloride; and/or

wherein the precursor mixture is substantially free of water; and/or
wherein the hot-melt extrusion of the extrusion mixture is performed under induced shear conditions; and/or
wherein the hot-melt extrusion of the extrusion mixture is performed in a screw extruder.

6. The method of any preceding claim, wherein the polyester is depolymerised by hydrolysis.

7. The method of any preceding claim, wherein the depolymerisation agent is a base; and, optionally or preferably, wherein the base is a hydroxide, optionally wherein the base is sodium hydroxide, potassium hydroxide, or ammonium hydroxide.

8. The method of any one of claims 1 to 5, wherein the polyester is depolymerised by glycolysis; and, optionally or preferably,

wherein the depolymerisation agent is a glycol; and, optionally or preferably,
wherein the amount, by weight, of the glycol in the extrusion mixture is at least 20% of the amount, by weight, of the plastic waste material in the extrusion mixture.

9. The method of any preceding claim, wherein the extrusion mixture comprises one or more depolymerisation catalysts.

10. The method of claim 9, wherein the one or more depolymerisation catalysts comprise a deep eutectic solvent, optionally wherein the deep eutectic solvent comprises either zinc acetate or zinc chloride in combination with urea, thiourea or glycerol.

11. The method of any preceding claim, wherein the method comprises enzymatically depolymerising residual polyester obtained from the hot-melt extrusion of the extrusion mixture.

12. The method of any one of claims 1 to 10, wherein the method comprises using residual polyester obtained from the hot-melt extrusion of the extrusion mixture as a feedstock for biopolymer production.

13. The method of any preceding claim, wherein the hot-melt extrusion of the extrusion mixture results in depolymerisation of at least 80% by weight of the polyester initially present in the plastic waste material; and/or
wherein the polyester comprises polyethylene terephthalate, optionally wherein the plastic waste material is post-consumer polyethylene terephthalate waste material.

14. Use of one or more inorganic salts as a plasticising agent to facilitate plasticisation of plastic waste material comprising polyester during depolymerisation of the plastic waste material by hot-melt extrusion of the plastic waste material in the presence of one or more depolymerisation agents, wherein the or each inorganic salt is selected from the list consisting of sodium chloride, lithium sulfate, lithium carbonate, lithium bicarbonate, potassium chloride, potassium carbonate, potassium bicarbonate, magnesium sulfate, magnesium carbonate, magnesium bicarbonate, and a calcium salt.

15. Use of terephthalic acid obtained from the method of claim 1 as a feedstock for bacterial cellulose production.

**Patentansprüche**

1. Verfahren zum Verarbeiten von Kunststoffabfallmaterial, umfassend Polyester, wobei das Verfahren Folgendes umfasst:

   Durchführen der Heißschmelzextrusion einer Extrusionsmischung, die das Kunststoffabfallmaterial und ein Depolymerisationsmittel zum Depolymerisieren des Polyesters umfasst;
   wobei die Extrusionsmischung ferner ein Weichmachermittel umfasst, das ein oder mehrere anorganische Salze umfasst, und
   wobei das oder jedes anorganische Salz aus der Liste ausgewählt wird, die aus Natriumchlorid, Lithiumsulfat, Lithiumcarbonat, Lithiumbicarbonat, Kaliumchlorid, Kaliumcarbonat, Kaliumbicarbonat, Magnesiumsulfat, Magnesiumcarbonat, Magnesiumbicarbonat und einem Calciumsalz besteht.

2. Verfahren nach Anspruch 1, wobei die Gesamtmenge der einen oder mehreren anorganischen Salze in der Extrusionsmischung mindestens 20 Gew.-% der Extrusionsmischung beträgt.

3. Verfahren nach einem der vorstehenden Ansprüche, wobei die Gesamtmenge, gemessen in Gewicht, der einen oder mehreren anorganischen Salze in der Extrusionsmischung mindestens der Menge, gemessen in Gewicht, des Kunststoffabfallmaterials in der Extrusionsmischung entspricht.

4. Verfahren nach einem der vorstehenden Ansprüche, wobei jedes der einen oder mehreren anorganischen Salze ein Salz eines monovalenten Kations ist; und/oder
   wobei das Depolymerisationsmittel ein Kation umfasst und wobei die ein oder mehreren anorganischen Salze Salze desselben Kations sind.

5. Verfahren nach einem der vorstehenden Ansprüche, wobei das eine oder mehrere anorganische Salze Natriumchlorid sind; und/oder

   wobei das Vorläufergemisch im Wesentlichen wasserfrei ist; und/oder
   wobei die Heißschmelzextrusion der Extrusionsmischung unter induzierten Scherbedingungen durchgeführt wird; und/oder
   wobei die Heißschmelzextrusion der Extrusionsmischung in einem Schneckenextruder durchgeführt wird.

6. Verfahren nach einem der vorstehenden Ansprüche, wobei das Polyester durch Hydrolyse depolymerisiert wird.

7. Verfahren nach einem der vorstehenden Ansprüche, wobei das Depolymerisationsmittel eine Basis ist; und optional oder bevorzugt,
   wobei die Basis ein Hydroxid ist, wobei die Basis optional Natriumhydroxid, Kaliumhydroxid oder Ammoniumhydroxid ist.

8. Verfahren nach einem der Ansprüche 1 bis 5, wobei das Polyester durch Glykolyse depolymerisiert wird; und, optional oder bevorzugt,

   wobei das Depolymerisationsmittel ein Glykol ist; und optional oder bevorzugt,
   wobei die Menge des Glykols in der Extrusionsmischung nach Gewicht mindestens 20 % der Menge des Kunststoffabfallmaterials in der Extrusionsmischung nach Gewicht beträgt.

9. Verfahren nach einem der vorstehenden Ansprüche, wobei das Extrusionsgemisch einen oder mehrere Depolymerisationskatalysatoren umfasst.

10. Verfahren nach Anspruch 9, wobei die einen oder mehrere Depolymerisationskatalysatoren ein tief eutektisches Lösungsmittel enthalten, wobei das tief eutektische Lösungsmittel optional entweder Zinkacetat oder Zinkchlorid in Kombination mit Harnstoff, Thioharnstoff oder Glycerin umfassen kann.

**11.** Verfahren nach einem der vorstehenden Ansprüche, wobei das Verfahren das enzymatische Depolymerisieren von Restpolyester umfasst, das aus der Heißschmelzextrusion der Extrusionsmischung gewonnen wird.

**12.** Verfahren nach einem der Ansprüche 1 bis 10, wobei das Verfahren das Verwenden von Restpolyester umfasst, das aus der Heißschmelzextrusion der Extrusionsmischung als Ausgangsmaterial für die Biopolymerproduktion gewonnen wird.

**13.** Verfahren nach einem der vorstehenden Ansprüche, wobei die Heißschmelzextrusion der Extrusionsmischung zu einer Depolymerisation von mindestens 80 Gew.-% des ursprünglich in dem Kunststoffabfallmaterial vorhandenen Polyesters führt; und/oder
wobei das Polyester Polyethylenterephthalat umfasst, wobei das Kunststoffabfallmaterial optional Post-Consumer-Polyethylenterephthalat-Abfallmaterial ist.

**14.** Verwendung eines oder mehrerer anorganischer Salze als Weichmacher zum Erleichtern der Plastifizierung von Kunststoffabfallmaterial, das Polyester umfasst, während der Depolymerisation des Kunststoffabfallmaterials durch Heißschmelzextrusion in Gegenwart eines oder mehrerer Depolymerisationsmittel, wobei das oder jedes anorganische Salz aus der Liste ausgewählt wird, die aus Natriumchlorid, Lithiumsulfat, Lithiumcarbonat, Lithiumbicarbonat, Kaliumchlorid, Kaliumcarbonat, Kaliumbicarbonat, Magnesiumsulfat, Magnesiumcarbonat, Magnesiumbicarbonat und einem Calciumsalz besteht.

**15.** Verwendung von Terephthalsäure, die nach dem Verfahren nach Anspruch 1 gewonnen wird, als Ausgangsstoff für die Produktion von bakterieller Zellulose.

## Revendications

**1.** Procédé de traitement d'un matériau de déchet plastique comprenant du polyester, le procédé comprenant :

la réalisation d'une extrusion à chaud d'un mélange d'extrusion comprenant le matériau de déchet plastique et un agent de dépolymérisation pour dépolymériser le polyester ;
dans lequel le mélange d'extrusion comprend en outre un agent plastifiant comprenant un ou plusieurs sels inorganiques, et
dans lequel le ou chaque sel inorganique est sélectionné dans la liste consistant en le chlorure de sodium, le sulfate de lithium, le carbonate de lithium, le bicarbonate de lithium, le chlorure de potassium, le carbonate de potassium, le bicarbonate de potassium, le sulfate de magnésium, le carbonate de magnésium, le bicarbonate de magnésium et un sel de calcium.

**2.** Procédé selon la revendication 1, dans lequel la quantité totale des un ou plusieurs sels inorganiques dans le mélange d'extrusion est d'au moins 20 %, en poids, du mélange d'extrusion.

**3.** Procédé selon une quelconque revendication précédente, dans lequel la quantité totale, en poids, des un ou plusieurs sels inorganiques dans le mélange d'extrusion est au moins égale à la quantité, en poids, du matériau de déchet plastique dans le mélange d'extrusion.

**4.** Procédé selon une quelconque revendication précédente, dans lequel chacun des un ou plusieurs sels inorganiques est un sel d'un cation monovalent ; et/ou
dans lequel l'agent de dépolymérisation comprend un cation, et dans lequel les un ou plusieurs sels inorganiques sont des sels du même cation.

**5.** Procédé selon une quelconque revendication précédente, dans lequel les un ou plusieurs sels inorganiques sont le chlorure de sodium ; et/ou

dans lequel le mélange précurseur est sensiblement exempt d'eau ; et/ou
dans lequel l'extrusion à chaud du mélange d'extrusion est effectuée dans des conditions de cisaillement induit ; et/ou
dans lequel l'extrusion à chaud du mélange d'extrusion est effectuée dans une extrudeuse à vis.

**6.** Procédé selon une quelconque revendication précédente, dans lequel le polyester est dépolymérisé par hydrolyse.

**7.** Procédé selon une quelconque revendication précédente, dans lequel l'agent de dépolymérisation est une base ; et, facultativement ou de préférence,
dans lequel la base est un hydroxyde, facultativement dans lequel la base est l'hydroxyde de sodium, l'hydroxyde de potassium ou l'hydroxyde d'ammonium.

**8.** Procédé selon l'une quelconque des revendications 1 à 5, dans lequel le polyester est dépolymérisé par glycolyse ; et, facultativement ou de préférence,

dans lequel l'agent de dépolymérisation est un glycol ; et, facultativement ou de préférence,
dans lequel la quantité, en poids, du glycol dans le mélange d'extrusion représente au moins 20 % de la quantité, en poids, du matériau de déchet plastique dans le mélange d'extrusion.

**9.** Procédé selon une quelconque revendication précédente, dans lequel le mélange d'extrusion comprend un ou plusieurs catalyseurs de dépolymérisation.

**10.** Procédé selon la revendication 9, dans lequel un ou plusieurs catalyseurs de dépolymérisation comprennent un solvant eutectique profond, facultativement dans lequel le solvant eutectique profond comprend soit de l'acétate de zinc, soit du chlorure de zinc en combinaison avec de l'urée, de la thiourée ou du glycérol.

**11.** Procédé selon une quelconque revendication précédente, dans lequel le procédé comprend une dépolymérisation par voie enzymatique du polyester résiduel obtenu à partir de l'extrusion à chaud du mélange d'extrusion.

**12.** Procédé selon l'une quelconque des revendications 1 à 10, dans lequel le procédé comprend l'utilisation du polyester résiduel obtenu à partir de l'extrusion à chaud du mélange d'extrusion comme matière première pour la production d'un biopolymère.

**13.** Procédé selon une quelconque revendication précédente, dans lequel l'extrusion à chaud du mélange d'extrusion entraîne une dépolymérisation d'au moins 80 % en poids du polyester initialement présent dans le matériau de déchet plastique ; et/ou
dans lequel le polyester comprend un polytéréphtalate d'éthylène, facultativement dans lequel le matériau de déchet plastique est un matériau de déchet de polytéréphtalate d'éthylène post-consommation.

**14.** Utilisation d'un ou de plusieurs sels inorganiques comme agent plastifiant pour faciliter la plastification d'un matériau de déchet plastique comprenant un polyester lors de la dépolymérisation du matériau de déchet plastique par extrusion à chaud du matériau de déchet plastique en présence d'un ou de plusieurs agents de dépolymérisation, dans lequel le ou chaque sel inorganique est sélectionné dans la liste consistant en le chlorure de sodium, le sulfate de lithium, le carbonate de lithium, le bicarbonate de lithium, le chlorure de potassium, le carbonate de potassium, le bicarbonate de potassium, le sulfate de magnésium, le carbonate de magnésium, le bicarbonate de magnésium et un sel de calcium.

**15.** Utilisation de l'acide téréphtalique obtenu par le procédé selon la revendication 1 comme matière première pour la production de cellulose bactérienne.

|              | Mag 100x | Mag 1000x | Mag 2000x |
|--------------|----------|-----------|-----------|

Unprocessed PET

Example 1

Reference Example 1

Fig. 1a

|  | Mag 100x | Mag 1000x | Mag 2000x |
|---|---|---|---|
| Example 3 | | | |
| Example 3 | | | |
| Reference Example 2 | | | |

Fig. 1b

Fig. 2a

Fig. 2b

Fig. 3a

Fig. 3b

Fig. 4

Fig. 5

**EP 4 433 531 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021123299 A1

- WO 2022216681 A1